# EUROPÄISCHE PATENTSCHRIFT

(11) **EP 2 667 075 B1**
(45) Veröffentlichungstag und Bekanntmachung des Hinweises auf die Patenterteilung: **19.02.2020**
(21) Anmeldenummer: 13167477.2
(22) Anmeldetag: 13.05.2013
(51) Int. Cl.: F16L 33/34, B29C 70/76, F16L 53/38

(54) **Aggregat aus einem Verbinder und einer Medienleitung**
Connection system consisting of a connector and a media line
Module constitué d'un connecteur et d'une conduite de fluide

(30) Priorität: 23.05.2012 DE 202012101885 U
(43) Veröffentlichungstag der Anmeldung: 27.11.2013
(73) Patentinhaber: TI Automotive (Fuldabrück) GmbH, 34277 Fuldabrück (DE)
(72) Erfinder: Jensen, Hans, D-73265 Dettingen unter Teck (DE); Barthel, Iris, D-34270 Schauenberg (DE); Häckel, André, 34513 Waldeck (DE); Orth, Joachim, 34560 Fritzlar (DE)
(74) Vertreter: Rohmann, Michael

(56) Entgegenhaltungen:
- WO-A1-2005/124219
- DE-A1-102010 026 827
- US-A1- 2008 012 293

## Beschreibung

Die Erfindung betrifft ein Aggregat aus einem Verbinder - insbesondere einem Schnellverbinder - und einer an den Verbinder angeschlossenen Medienleitung, insbesondere einer an den Verbinder angeschlossenen beheizbaren Medienleitung. - Ein Verbinder des erfindungsgemäßen Aggregates weist in der Regel mindestens zwei Anschlussabschnitte für den Anschluss einer Medienleitung oder für den Anschluss eines Tanks oder dergleichen Aggregat auf. Mit einem solchen Verbinder werden insbesondere zwei Medienleitungen miteinander verbunden oder eine Medienleitung wird mit einem Tank oder dergleichen Aggregat verbunden. Normalerweise ist ein solcher Verbinder mit einem inneren Leitungskanal für die Durchleitung eines fluiden Mediums ausgestattet. Schnellverbinder meint im Rahmen der Erfindung insbesondere einen Verbinder, der zumindest einen Anschlussabschnitt aufweist, an dem über eine Rastverbindung und/oder Steckverbindung einfach und zügig ein Anschluss verwirklicht werden kann und in der Regel auch wieder gelöst werden kann. - Bei der Medienleitung des erfindungsgemäßen Aggregates handelt es sich vorzugsweise um eine beheizbare Medienleitung und zwar insbesondere um eine beheizbare Medienleitung für die Durchleitung einer wässrigen Harnstofflösung.

Aggregate der vorstehend beschriebenen Art sind unter anderem auch in sogenannten SCR-Einrichtungen bzw. SCR-Systemen bekannt. In Kraftfahrzeugen, insbesondere in Fahrzeugen mit Dieselmotor ist in der Regel ein solches SCR-System mit einem SCR-Katalysator für die Abgasbehandlung vorhanden (SCR: Selective Catalytic Reduction). Für eine effektive Reduzierung der im Abgas eines Kraftfahrzeuges enthaltenen Stickoxide wird dem Abgas vor einem SCR-Katalysator eine Harnstofflösung zudosiert. Eine solche Harnstofflösung bzw. wässrige Harnstofflösung hat den Nachteil, dass Harnstoff bei Temperaturen unter minus 11°C gefriert und teilweise auskristallisiert. Dadurch wird eine weitere funktionssichere Zufuhr der Harnstofflösung behindert oder vollständig blockiert und eine effektive Reduzierung der Stickoxide im Abgas beeinträchtigt bzw. verhindert. Um derartige Störungen zu vermeiden, werden die Zuführungsleitungen bzw. Medienleitungen für die Harnstofflösung beheizt. Es ist auch bereits bekannt, einen an eine solche Medienleitung angeschlossenen Verbinder bzw. Schnellverbinder für die Durchleitung einer Harnstofflösung zu beheizen. Die Beheizung der Medienleitung und/oder des Verbinders kann beispielsweise mit elektrisch betriebenen Heizelementen in Form von Heizdrähten oder Heizfolien erfolgen.

Aus DE 10 2010 026 827 A1 ist ein Aggregat aus einem Verbinder und einer an den Verbinder angeschlossenen beheizbaren Medienleitung bekannt. Der Verbinder ist wiederum über einen Flansch bzw. über eine eingeschweißte Aufnahme an eine Wand angeschlossen. Die beheizbare Medienleitung wird von einem Außenrohr umgeben und der Verbinder übergreift dieses Außenrohr. Der Verbinder bzw. das Verbindungsgehäuse kann aus einem Spritzgussmaterial bestehen.

Aus US 2008/0012293 A1 ist ein Verbinder mit einer daran angeschlossenen Medienleitung bekannt. Die Medienleitung weist ein Außenrohr und ein Innenrohr auf. Die dem Verbinder zugewandte Seite der Medienleitung wird vor dem Umspritzen mit einem schmelzflüssigen Kunststoff mit einer Verschlusskappe abgedichtet. Diese Maßnahmen lassen im Hinblick auf ihre Funktionssicherheit und im Hinblick auf ein vollständiges Abdichten der Medienleitung zu wünschen übrig - schließlich ist aus WO 2005/124219 A1 ein elektrisch beheizbarer Verbinder bekannt, an dem eine Medienleitung angeschlossen ist, die ebenfalls beheizt wird.

Aus der Praxis ist es auch bereits bekannt, dass ein Verbinder, insbesondere ein beheizbarer Verbinder bzw. Schnellverbinder einen gegossenen bzw. gespritzten Mantel aus thermoplastischem Kunststoff aufweist. Beim Aufbringen des schmelzflüssigen Kunststoffes für diesen Mantel können aber in nachteilhafter Weise Komponenten des Aggregates beeinträchtigt bzw. beschädigt werden. Das gilt insbesondere für die an den Verbinder angeschlossene Medienleitung. Vor allem kann die thermische Isolierung der Medienleitung durch den Einfluss des schmelzflüssigen Kunststoffes erheblich beeinträchtigt werden.

Demgegenüber liegt der Erfindung das technische Problem zugrunde, ein Aggregat der eingangs genannten Art anzugeben, bei dem die vorstehend beschriebenen Nachteile effektiv vermieden werden können.

Zur Lösung dieses technischen Problems lehrt die Erfindung ein Aggregat aus einem Verbinder - insbesondere Schnellverbinder - und einer an den Verbinder angeschlossenen Medienleitung, insbesondere einer beheizbaren Medienleitung, wobei der Verbinder einen gegossenen und/oder gespritzten Mantel - insbesondere Außenmantel - aus thermoplastischem Kunststoff aufweist und wobei die Medienleitung an einem dem Verbinder zugewandten Ende bzw. Abschnitt eine Verschlusskappe aufweist, die ein Eindringen des schmelzflüssigen Kunststoffes in die Medienleitung beim Gießen und/oder Spritzen des Mantels bzw. Außenmantels verhindert, wobei die Verschlusskappe einen ersten zylinderförmigen Abschnitt und einen zweiten zylinderförmigen Abschnitt aufweist, wobei der erste zylinderförmige Abschnitt einen größeren Durchmesser als der zweite zylinderförmige Abschnitt hat, wobei der erste zylinderförmige Abschnitt der Verschlusskappe unmittelbar an den zweiten zylinderförmigen Abschnitt angrenzt, wobei der erste zylinderförmige Abschnitt der Verschlusskappe ein Außenrohr der Medienleitung übergreift und wobei die Länge der Verschlusskappe in Längsrichtung des Verbinders geringer ist als die Länge des Verbinders. - Es liegt im Rahmen der Erfindung, dass zur Realisierung des Mantels bzw. Außenmantels ein Innenteil des Verbinders bzw. Schnellverbinders mit dem schmelzflüssigen thermoplastischen Kunststoff umgossen bzw. umspritzt wird. Die erfindungsgemäße Verschlusskappe schützt die Medienleitung effektiv vor einem Eindringen des schmelzflüssigen Kunststoffes.

Es liegt weiterhin im Rahmen der Erfindung, dass das erfindungsgemäße Aggregat Bestandteil einer SCR-Einrichtung bzw. eines SCR-Systems eines Fahrzeuges/Kraftfahrzeuges ist. Fernerhin liegt es im Rahmen der Erfindung, dass mit der Medienleitung eine wässrige Harnstofflösung einem SCR-Katalysator zugeführt wird und dass die Medienleitung mit zumindest einem Heizelement beheizt wird. Bei dem Heizelement handelt es sich vorzugsweise um einen Heizdraht und/oder um eine Heizfolie. Es empfiehlt sich, dass der an die Medienleitung angeschlossene Verbinder einen inneren Leitungskanal zur Durchleitung der Harnstofflösung aufweist und dass bevorzugt auch der Verbinder bzw. der innere Leitungskanal des Verbinders mit zumindest einem Heizelement beheizt wird. Nach einer Ausführungsvariante handelt es sich dabei um ein von dem Heizelement der Medienleitung separates Heizelement. Es hat sich bewährt, dass dieses Heizelement des Verbinders als Heizdraht und/oder als Heizfolie ausgeführt ist.

Eine besonders bevorzugte Ausführungsform der Erfindung ist dadurch gekennzeichnet, dass die Medienleitung ein Innenrohr zur Durchleitung der Harnstofflösung sowie ein das Innenrohr umgebendes Außenrohr aufweist und dass zwischen Innenrohr und Außenrohr zumindest ein Heizelement zur Beheizung des Innenrohres angeordnet ist. Zweckmäßigerweise umgibt das Außenrohr das Innenrohr konzentrisch bzw. sind Innenrohr und Außenrohr coaxial zueinander angeordnet. Es liegt im Rahmen der Erfindung, dass zwischen Innenrohr und Außenrohr eine Luftschicht zur thermischen Isolierung vorgesehen ist. Bei dieser besonders bevorzugten Ausführungsform verhindert die erfindungsgemäße Verschlusskappe insbesondere ein Eindringen des schmelzflüssigen Kunststoffes in das Außenrohr bzw. in den Zwischenraum zwischen Außenrohr und Innenrohr. Zweckmäßigerweise umgibt das zumindest eine Heizelement - bevorzugt der Heizdraht und/oder die Heizfolie - das Innenrohr der Medienleitung wendelförmig. Gemäß einer empfohlenen Ausführungsform der Erfindung ist das Außenrohr der Medienleitung als Wellrohr und/oder als Außenrohr mit glatter Außenoberfläche ausgebildet. Im letztgenannten Fall besteht das Außenrohr zweckmäßigerweise aus einem thermoplastischen Elastomer und bevorzugt aus EPDM.

Es empfiehlt sich, dass zwischen Innenrohr und Außenrohr der Medienleitung eine Zwischenschicht vorgesehen ist und dass das zumindest eine Heizelement zwischen dem Innenrohr und der Zwischenschicht angeordnet ist. Bei der Zwischenschicht kann es sich insbesondere um ein Klebeband handeln, das vorzugsweise wendelförmig um das Aggregat aus Innenrohr und dem zumindest einen Heizelement gewickelt ist. Die Zwischenschicht bzw. das Klebeband dient insbesondere zur Fixierung des zumindest einen Heizelementes an dem Innenrohr.

Es liegt im Rahmen der Erfindung, dass die erfindungsgemäße Verschlusskappe ein Ende bzw. ein stirnseitiges Ende des Außenrohres der Medienleitung übergreift. Zweckmäßigerweise übergreift die Verschlusskappe das stirnseitige Ende des Außenrohres mittels eines ringförmigen Flansches. Die Verschlusskappe bzw. der ringförmige Flansch liegt vorzugsweise zumindest bereichsweise formschlüssig an dem Außenrohr bzw. an der Außenoberfläche des Außenrohres an. - Nach empfohlener Ausführungsform der Erfindung durchgreift das Innenrohr die Verschlusskappe. Dieses Durchgreifen der Verschlusskappe erfolgt bevorzugt mit möglichst geringem Abstand bzw. mit möglichst geringem Spiel zwischen Innenrohr und Verschlusskappe. Zweckmäßigerweise durchgreift das Innenrohr mitsamt dem zumindest einen aufgebrachten Heizelement die Verschlusskappe.

Erfindungsgemäß weist die Verschlusskappe einen ersten zylinderförmigen Abschnitt und einen zweiten zylinderförmigen Abschnitt auf und der erste zylinderförmige Abschnitt hat einen größeren Durchmesser als der zweite zylinderförmige Abschnitt. Es liegt im Rahmen der Erfindung, dass der erste zylinderförmige Abschnitt der Verschlusskappe unmittelbar an den zweiten zylinderförmigen Abschnitt angrenzt. Insbesondere der zweite zylinderförmige Abschnitt mit dem geringeren Durchmesser kann auch eine von der Zylinderform abweichende Form, insbesondere eine konische Form aufweisen. Vorzugsweise besteht die erfindungsgemäße Verschlusskappe lediglich aus den beiden zylinderförmigen Abschnitten oder im Wesentlichen aus den beiden zylinderförmigen Abschnitten. Erfindungsgemäß übergreift der erste zylinderförmige Abschnitt der erfindungsgemäßen Verschlusskappe das Außenrohr der Medienleitung. Vorzugsweise durchgreift das Innenrohr den zweiten zylinderförmigen Abschnitt der Verschlusskappe. Es hat sich als vorteilhaft erwiesen, dass der Innendurchmesser des ersten zylinderförmigen Abschnittes 6 bis 14 mm und bevorzugt 8 bis 12 mm beträgt. Zweckmäßigerweise beträgt der Innendurchmesser des zweiten zylinderförmigen Abschnittes 2 bis 6 mm, bevorzugt 3 bis 4,5 mm.

Eine besonders empfohlene Ausführungsform der Erfindung ist dadurch gekennzeichnet, dass die erfindungsgemäße Verschlusskappe aus einem thermoplastischem Elastomer bzw. im Wesentlichen aus einem thermoplastischem Elastomer besteht. Vorzugsweise besteht die Verschlusskappe aus EPDM bzw. im Wesentlichen aus EPDM. EPDM meint Ethylen-Propylen-Dien-Kautschuk.

Eine erfindungsgemäße Verschlusskappe aus einem thermoplastischem Elastomer bzw. aus EPDM hat sich besonders bewährt, weil sie zum einen temperaturstabil eingestellt werden kann und zum anderen ausreichend weich eingestellt werden kann. Aufgrund der relativ hohen Weichheit kann die Verschlusskappe einfach und problemlos auf die Medienleitung bzw. auf das Außenrohr der Medienleitung aufgeschoben werden.

Es liegt im Rahmen der Erfindung, dass der Verbinder des erfindungsgemäßen Aggregates ein Innenteil aufweist und dass der Außenmantel des Verbinders um das Innenteil herum gegossen und/oder gespritzt ist/wurde. Zweckmäßigerweise weist das Innenteil des Verbinders den inneren Leitungskanal zur Durchleitung eines fluiden Mediums bzw. Durchleitung einer wässrigen Harnstofflösung auf. Es liegt fernerhin im Rahmen der Erfindung, dass die erfindungsgemäße Verschlusskappe zumindest bereichsweise von dem Außenmantel abgedeckt ist.

Der Erfindung liegt die Erkenntnis zugrunde, dass aufgrund der erfindungsgemäßen Maßnahmen insbesondere die Medienleitung des erfindungsgemäßen Aggregates vor nachteilhaften Einflüssen des schmelzflüssigen Kunststoffes geschützt werden kann, der beim Gießen und/oder Spritzen des Außenmantels des Verbinders aufgebracht wird. Mit der erfindungsgemäßen Verschlusskappe kann effektiv und funktionssicher ein Eindringen von schmelzflüssigem Kunststoff in die Medienleitung bzw. in ein Außenrohr der Medienleitung vermieden werden. Auf diese Weise bleibt vor allem auch die thermische Isolierung der Medienleitung gewährleistet. Hervorzuheben ist, dass sich eine erfindungsgemäße Verschlusskappe auf einfache und kostengünstige Weise herstellen lässt und dass eine solche Verschlusskappe auch einfach und problemlos an der Medienleitung montierbar ist. Im Ergebnis zeichnet sich die Erfindung durch geringen Aufwand und insbesondere auch durch geringen Kostenaufwand auf.

Nachfolgend wird die Erfindung anhand einer lediglich ein Ausführungsbeispiel darstellenden Zeichnung näher erläutert. Es zeigen in schematischer Darstellung:
- Fig. 1: eine Ansicht eines erfindungsgemäßen Aggregates aus einem Verbinder und einer daran angeschlossenen Medienleitung und
- Fig. 2: einen Schnitt durch eine erfindungsgemäße Verschlusskappe.

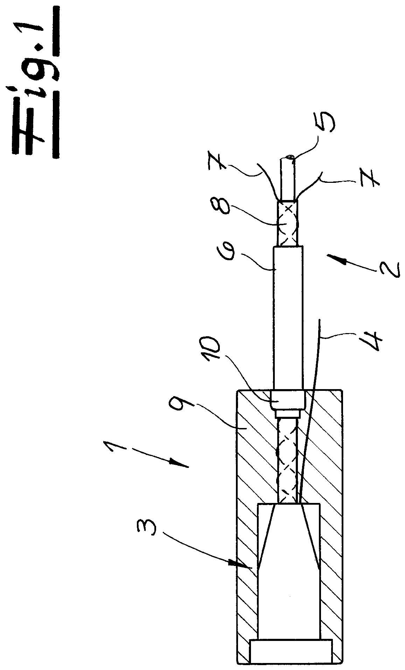

Fig. 1 zeigt ein erfindungsgemäßes Aggregat aus einem als Schnellverbinder ausgebildeten Verbinder 1 und einer an den Verbinder 1 angeschlossenen beheizbaren Medienleitung 2. Das Aggregat ist vorzugsweise und im Ausführungsbeispiel Bestandteil einer nicht näher dargestellten SCR-Einrichtung eines Kraftfahrzeuges. Mit der beheizbaren Medienleitung 2 wird einem SCR-Katalysator eine wässrige Harnstofflösung zugeführt.

Der Verbinder 1 weist ein Innenteil 3 mit einem nicht näher dargestellten inneren Leitungskanal zur Durchleitung der wässrigen Harnstofflösung auf. Der Verbinder 1 bzw. der innere Leitungskanal des Verbinders 1 wird bevorzugt und im Ausführungsbeispiel mit Hilfe eines elektrisch betriebenen Heizdrahtes 4 beheizt.

Im Ausführungsbeispiel und nach bevorzugter Ausführungsform der Erfindung weist die Medienleitung 2 ein Innenrohr 5 zur Durchleitung der wässrigen Harnstofflösung auf sowie ein das Innenrohr 5 umgebendes Außenrohr 6. Vorzugsweise und im Ausführungsbeispiel umgibt ein Heizdraht 7 zur Beheizung der Medienleitung 2 das Innenrohr 5 wendelförmig. Zwischen Innenrohr 5 und Außenrohr 6 ist bevorzugt und im Ausführungsbeispiel fernerhin eine Zwischenschicht in Form eines wendelförmig um das Aggregat aus Innenrohr 5 und Heizdraht 7 gewickeltes Klebeband 8 vorgesehen. Mit Hilfe des Klebebandes 8 wird insbesondere der Heizdraht 7 an dem Innenrohr 5 fixiert.

Der Verbinder 1 weist einen gegossenen und/oder gespitzten Außenmantel 9 aus thermoplastischem Kunststoff auf. Dieser Außenmantel 9 wird zweckmäßigerweise realisiert, indem schmelzflüssiger thermoplastischer Kunststoff um das Innenteil 3 des Verbinders 1 gegossen und/oder gespritzt wird. Erfindungsgemäß weist die Medienleitung 2 an einem dem Verbinder 1 zugewandten Ende eine Verschlusskappe 10 auf, die ein Eindringen von schmelzflüssigem Kunststoff in die Medienleitung 2 beim Gießen und/oder Spritzen des Außenmantels 9 verhindert. Die erfindungsgemäße Verschlusskappe 10 erfüllt also gleichsam eine Abdichtfunktion für die Medienleitung 2 gegenüber dem schmelzflüssigen Kunststoff.

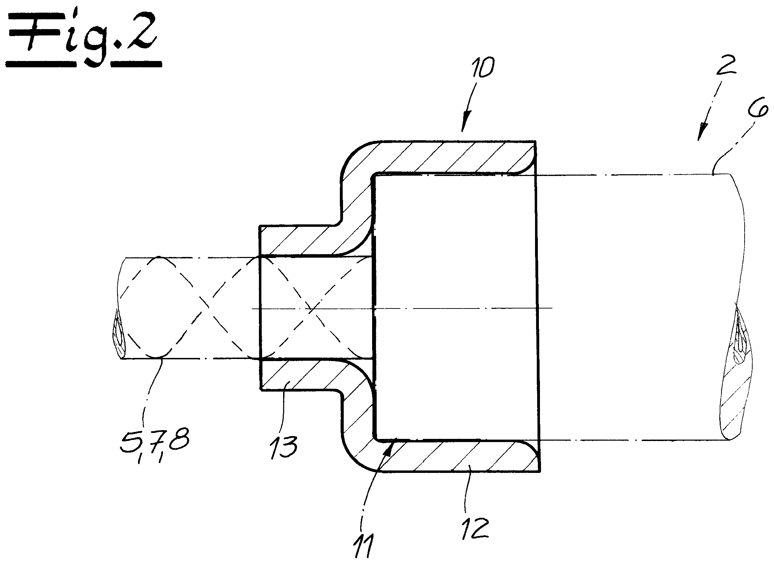

Zweckmäßigerweise und im Ausführungsbeispiel übergreift die erfindungsgemäße Verschlusskappe 10 ein stirnseitiges Ende 11 des Außenrohres 6. Dazu weist die Verschlusskappe 10 einen ersten zylinderförmigen Abschnitt 12 in Form eines ringförmigen Flansches auf. In der in Fig. 1 dargestellten Ausführungsform ist das Außenrohr 6 im Übrigen als Kunststoffschlauch mit glatter Außenoberfläche ausgeführt. Dieser Kunststoffschlauch mag vorzugsweise aus EPDM bestehen. Neben dem ersten zylinderförmigen Abschnitt 12 weist die Verschlusskappe 10 weiterhin einen zweiten zylinderförmigen Abschnitt 13 auf, der einen geringeren Durchmesser hat als der erste zylinderförmige Abschnitt 12. Im Ausführungsbeispiel (siehe insbesondere auch Fig. 2) besteht die Verschlusskappe 10 lediglich aus dem ersten zylinderförmigen Abschnitt 12 und dem zweiten zylinderförmigen Abschnitt 13, wobei die Abschnitte 12, 13 unmittelbar aneinander angrenzen. Der zweite Abschnitt der Verschlusskappe 10 mit geringerem Durchmesser kann abweichend von der Zylinderform auch beispielsweise konisch ausgebildet sein. Im Ausführungsbeispiel (Fig. 1) durchgreift das Innenrohr 5 mitsamt dem Heizdraht 7 den zweiten zylinderförmigen Abschnitt 13 der Verschlusskappe 10. Der erste zylinderförmige Abschnitt 12 der Verschlusskappe 10 liegt bevorzugt und im Ausführungsbeispiel formschlüssig auf der Außenoberfläche des Außenrohres 6 auf. Die Verschlusskappe besteht vorzugsweise aus EPDM. Bevorzugt und im Ausführungsbeispiel ist die Verschlusskappe 10 von dem Außenmantel 9 quasi vollständig abgedeckt.

## Patentansprüche

1. Aggregat aus einem Verbinder (1) - insbesondere einem Schnellverbinder - und einer an den Verbinder (1) angeschlossenen Medienleitung (2), insbesondere einer beheizbaren Medienleitung (2), wobei der Verbinder (1) einen gegossenen und/oder gespritzten Mantel, insbesondere Außenmantel (9) aus Kunststoff aufweist und wobei die Medienleitung (2) an einem dem Verbinder (1) zugewandten Ende eine Verschlusskappe (10) aufweist, die ein Eindringen von schmelzflüssigem Kunststoff in die Medienleitung (2) beim Gießen und/oder Spritzen des Mantels verhindert, wobei die Verschlusskappe (10) einen ersten zylinderförmigen Abschnitt (12) und einen zweiten zylinderförmigen Abschnitt (13) aufweist, wobei der erste zylinderförmige Abschnitt einen größeren Durchmesser als der zweite zylinderförmige Abschnitt hat, wobei der erste zylinderförmige Abschnitt der Verschlusskappe (10) unmittelbar an den zweiten zylinderförmigen Abschnitt angrenzt, wobei der erste zylinderförmige Abschnitt der Verschlusskappe (10) ein Außenrohr der Medienleitung übergreift und wobei die Länge der Verschlusskappe (10) in Längsrichtung des Verbinders (1) geringer ist als die Länge des Verbinders (1).

2. Aggregat nach Anspruch 1, wobei das Aggregat Bestandteil einer SCR-Einrichtung eines Fahrzeuges ist, wobei mit der Medienleitung (2) eine Harnstofflösung einem SCR-Katalysator zuführbar ist und wobei die Medienleitung (2) mit zumindest einem Heizelement beheizbar ist.

3. Aggregat nach Anspruch 2, wobei der Verbinder (1) einen inneren Leitungskanal zur Durchleitung der Harnstofflösung aufweist und wobei der Verbinder (1) bzw. der innere Leitungskanal vorzugsweise mit zumindest einem Heizelement beheizbar ist.

4. Aggregat nach einem der Ansprüche 1 bis 3, wobei die Medienleitung (2) ein Innenrohr (5) sowie ein das Innenrohr (5) umgebendes Außenrohr (6) aufweist und wobei zwischen Innenrohr (5) und Außenrohr (6) zumindest ein Heizelement zur Beheizung des Innenrohres (5) angeordnet ist.

5. Aggregat nach Anspruch 4, wobei zwischen Innenrohr (5) und Außenrohr (6) eine Zwischenschicht vorgesehen ist und wobei das zumindest eine Heizelement zwischen dem Innenrohr (5) und der Zwischenschicht angeordnet ist.

6. Aggregat nach einem der Ansprüche 4 oder 5, wobei die Verschlusskappe (10) ein stirnseitiges Ende (11) des Außenrohres (6) übergreift.

7. Aggregat nach einem der Ansprüche 4 bis 6, wobei das Innenrohr (5) die Verschlusskappe (10) durchgreift.

8. Aggregat nach einem der Ansprüche 1 bis 7, wobei die Verschlusskappe (10) aus einem thermoplastischen Elastomer bzw. im Wesentlichen aus einem thermoplastischen Elastomer besteht.

9. Aggregat nach einem der Ansprüche 1 bis 8, wobei die Verschlusskappe aus EPDM bzw. im Wesentlichen aus EPDM besteht.

10. Aggregat nach einem der Ansprüche 1 bis 9, wobei der Verbinder (1) ein Innenteil (3) aufweist und wobei der Außenmantel (9) um das Innenteil gegossen und/oder gespritzt ist.

11. Aggregat nach einem der Ansprüche 1 bis 10, wobei die Verschlusskappe (10) zumindest bereichsweise von dem Außenmantel (9) abgedeckt ist.

## Claims

1. An aggregate comprised of a connector (1)-in particular a quick connector-and a media line (2) hooked up to the connector (1), in particular a heatable media line (2), wherein the connector (1) has a cast and/or sprayed jacket, in particular an outer jacket (9) made out of plastic, and wherein an end of the media line (2) facing the connector (1) has a sealing cap (10), which prevents molten plastic from penetrating into the media line (2) while casting and/or spraying the jacket, wherein the sealing cap (10) has a first cylindrical section (12) and a second cylindrical section (13), wherein the first cylindrical section has a larger diameter than the second cylindrical section, wherein the first cylindrical section of the sealing cap (10) directly adjoins the second cylindrical section, wherein the first cylindrical section of the sealing cap (10) overlaps an outer pipe of the media line, and wherein the length of the sealing cap (10) is less than the length of the connector (1) in the longitudinal direction of the connector (1).

2. The aggregate according to claim 1, wherein the aggregate is part of an SCR system for a vehicle, wherein a urea solution can be supplied to the SCR catalytic converter with the media line (2), and wherein the media line (2) can be heated with at least one heating element.

3. The aggregate according to claim 2, wherein the connector (1) has an inner line channel for conducting the urea solution, and wherein the connector (1) or inner line channel can preferably be heated with at least one heating element.

4. The aggregate according to one of claims 1 to 3, wherein the media line (2) has an inner pipe (5) and an outer pipe (6) that envelops the inner pipe (5), and wherein at least one heating element for heating the inner pipe (5) is arranged between the inner pipe (5) and outer pipe (6).

5. The aggregate according to claim 4, wherein an intermediate layer is provided between the inner pipe (5) and outer pipe (6), and wherein the at least one heating element is arranged between the inner pipe (5) and intermediate layer.

6. The aggregate according to one of claims 4 or 5, wherein the sealing cap (10) overlaps a front end (11) of the outer pipe (6).

7. The aggregate according to one of claims 4 to 6, wherein the inner pipe (5) passes through the sealing cap (10).

8. The aggregate according to one of claims 1 to 7, wherein the sealing cap (10) consists of a thermoplastic elastomer or essentially of a thermoplastic elastomer.

9. The aggregate according to one of claims 1 to 8, wherein the sealing cap consists of EPDM or essentially of EPDM.

10. The aggregate according to one of claims 1 to 9, wherein the connector (1) has an inner part (3), and wherein the outer jacket (9) is cast and/or sprayed around the inner part.

11. The aggregate according to one of claims 1 to 10, wherein at least areas of the sealing cap (10) are covered by the outer jacket (9).

## Revendications

1. Ensemble composé d'un raccord (1), en particulier d'un raccord rapide, et d'une conduite de fluide (2) raccordé au raccord (1), en particulier d'une conduite de fluide (2) chauffable, sachant que le raccord (1) comporte une enveloppe moulée et/ou injectée, en particulier une enveloppe extérieure (9) en matière plastique et sachant que la conduite de fluide (2) comporte à une extrémité tournée vers le raccord (1), un bouchon de fermeture (10), qui évite une pénétration de matière plastique en fusion dans la conduite de fluide (2) lors du moulage et/ou de l'injection de l'enveloppe, sachant que le bouchon de fermeture (10) comporte une première section cylindrique (12) et une deuxième section cylindrique (13), sachant que la première section cylindrique possède un diamètre plus grand que la deuxième section cylindrique, sachant que la première section cylindrique du bouchon de fermeture (10) est directement adjacent à la deuxième section cylindrique, sachant que la première section cylindrique du bouchon de fermeture (10) vient en prise sur un tube extérieur de la conduite de fluide et sachant que la longueur du bouchon de fermeture (10) dans le sens longitudinal du raccord (1) est plus faible que la longueur du raccord (1) .

2. Ensemble selon la revendication 1, sachant que l'ensemble est une partie constituante d'un dispositif RCS (réduction catalytique sélective) d'un véhicule, sachant qu'avec la conduite de fluide (2), il est possible d'alimenter un catalyseur RCS avec une solution d'urée et sachant que la conduite de fluide (2) peut être chauffée avec au moins un élément de chauffage.

3. Ensemble selon la revendication 2, sachant que le raccord (1) comporte un canal de conduit intérieur pour faire passer la solution d'urée et sachant que le raccord (1) ou le canal de conduit peut être chauffé de préférence avec au moins un élément de chauffage.

4. Ensemble selon l'une quelconque des revendications 1 à 3, sachant que la conduite de fluide (2) comporte un tube intérieur (5) ainsi qu'un tube extérieur (6) entourant le tube intérieur (5) et sachant qu'un élément de chauffage est disposé entre le tube intérieur (5) et le tube extérieur (6) pour chauffer le tube intérieur (5) .

5. Ensemble selon la revendication 4, sachant qu'une couche intermédiaire est prévue entre le tube intérieur (5) et le tube extérieur (6) et sachant qu'au moins un élément de chauffage est disposé entre le tube intérieur (5) et la couche intermédiaire.

6. Ensemble selon l'une quelconque des revendications 4 ou 5, sachant que le bouchon de fermeture (10) vient en prise sur une extrémité frontale (11) du tube extérieur (6) .

7. Ensemble selon l'une quelconque des revendications 4 à 6, sachant que le tube intérieur (5) traverse le bouchon de fermeture (10).

8. Ensemble selon l'une quelconque des revendications 1 à 7, sachant que le bouchon de fermeture (10) est composé d'un élastomère thermoplastique ou pour l'essentiel d'un élastomère thermoplastique.

9. Ensemble selon l'une quelconque des revendications 1 à 8, sachant que le bouchon de fermeture est en éthylène-propylène-diène-monomère (EPDM) ou pour l'essentiel en EPDM.

10. Ensemble selon l'une quelconque des revendications 1 à 9, sachant que le raccord (1) comporte une partie intérieure (3) et sachant que l'enveloppe extérieure (9) est moulée et/ou injectée autour de la partie intérieure.

11. Ensemble selon l'une quelconque des revendications 1 à 10, sachant que le bouchon de fermeture (10) est couvert au moins par endroits par l'enveloppe extérieure (9).
